# EUROPÄISCHE PATENTSCHRIFT

(11) **EP 3 620 038 B1**
(45) Veröffentlichungstag und Bekanntmachung des Hinweises auf die Patenterteilung: **15.12.2021**
(21) Anmeldenummer: 19185758.0
(22) Anmeldetag: 11.07.2019
(51) Int. Cl.: A01B 63/24, A01B 59/043

(54) **GEZOGENER ANBAUGRUBBER**
TOWED CULTIVATOR
CULTIVATEUR TRACTÉ

(30) Priorität: 06.09.2018 DE 202018105101 U
(43) Veröffentlichungstag der Anmeldung: 11.03.2020
(73) Patentinhaber: PÖTTINGER Landtechnik GmbH, 4710 Grieskirchen (AT)
(72) Erfinder: Meindlhumer, Wilhelm, 4710 Grieskirchen (AT); Preimeß, Hans-Jörg, 4710 Grieskirchen (AT)
(74) Vertreter: Thoma, Michael

(56) Entgegenhaltungen:
- EP-A1- 3 036 981
- DE-A1- 10 236 827
- DE-U1- 7 821 826
- US-B1- 6 192 993

## Beschreibung

Die vorliegende Erfindung betrifft eine landwirtschaftliche Bodenbearbeitungsmaschine, insbesondere einen gezogenen Anbaugrubber, mit einem Maschinenrahmen, der mehrere hintereinander angeordnete Querträger aufweist, an denen jeweils mehrere Bodenbearbeitungswerkzeuge, insbesondere Grubberzinken, befestigt sind, wobei an dem Maschinenrahmen frontseitig eine Deichsel mit einem Ankoppelgelenk zum gelenkigen Ankoppeln an einen Schlepper angeordnet ist und unter der Deichsel vor dem vordersten Querträger und den daran befestigten Bodenbearbeitungswerkzeugen ein zusätzliches Mittelwerkzeug vorgesehen ist.

Um bei Grubbern Seitenzugkräfte zu vermeiden bzw. zumindest klein zuhalten, ist in der Regel eine symmetrische Verteilung der Grubberzinken erforderlich, sodass sich die Seitenzugkräfte der einzelnen Grubberzinken gegenseitig kompensieren können. Um gleichzeitig eine vollständige Abdeckung bzw. Bearbeitung des Bodens über die Arbeitsbreite der Maschine zu erzielen, ist zumindest in einigen Reihen eine ungerade Anzahl an Grubberzinken vorgesehen, um einen Grubberzinken in der Mitte, d.h. in einer mittleren Zugspur anordnen zu können.

Die Schrift US 6,192,993 B1 zeigt ein Bodenbearbeitungsgerät mit Grubberzinken, die in mehreren Reihen hintereinander angeordnet sind, sowie einer vorauslaufenden Scharscheibenreihe, die gegenüber den Grubberzinken durch Abknicken des Maschinenrahmens höhenverstellbar ist. Eine Deichsel ist am hinteren Ende des die Grubberzinken tragenden Rahmens befestigt und erstreckt sich nach vorne über die Scharscheiben hinweg zum Schlepper.

Die Schrift DE 102 36 827 A1 zeigt eine Scheibenegge, deren Scharscheiben an Tragarmen aufgehängt sind, die von einem zentralen Maschinenrahmen rechts und links auskragen und um eine aufrechte Schwenkachse verschwenkt werden können, sodass der Schnittwinkel verändert werden kann. Hierdurch verspricht sich die Schrift eine gleichmäßige Arbeitstiefe bei unterschiedlich harten Böden. Die Arbeitstiefe wird durch ein vorauslaufendes Tastrad gemessen, das seitlich neben der Deichsel der vordersten Scharscheibenreihe vorausläuft.

Die Schrift DE 78 21 826 U1 zeigt einen Grubber, von dessen Maschinenrahmen, der die Grubberzinken trägt, eine Anlenkkonsole für weitere Werkzeuge nach hinten zum Heck hin auskragt.

Bei solchen Grubbern wird seit geraumer Zeit darauf gesetzt, das mittige vordere Werkzeug aus der vordersten Grubberzinkenreihe heraus nach vorne zu versetzen, sodass dieser Mittelzinken sozusagen der vordersten Grubberzinkenreihe vorausläuft. Dies spart zum einen Baulänge und stellt zum anderen sicher, dass der nach vorne versetzte Mittelzinken kein Hindernis darstellt, da sich der Mittelzinken unter der bei Anbaugeräten vorgesehenen Dreipunktanlenkung und bei gezogenen Geräten unter der dabei vorgesehenen Deichsel erstreckt.

Bei den genannten Anbaugeräten mit Dreipunktanlenkung, über die der Grubber ausgehoben werden kann, ist ein solcher nach vorne versetzter Mittelzinken an sich recht problemlos, wie dies die Schrift EP 30 36 981 A1 zeigt. Der nach vorne versetzte Mittelzinken ist in fester Lage relativ zu den anderen Grubberzinken positioniert und wie alle anderen Grubberzinken aushebbar, wenn was Anbaugerät über die Dreipunktanlenkung vom Schlepper her ausgehoben wird.

Bei gezogenen Deichselgeräten sind solche nach vorne versetzte Mittelzinken indes problematischer. Zum einen werden solche gezogenen Deichsel-Grubber für den Straßentransport meist durch eine höhenverstellbare Nachläuferwalze oder ein separates, absenkbares Transportfahrwerk angehoben, so dass die am Maschinenrahmen befestigten Grubberzinken ausreichend weit angehoben werden, um den Straßentransport zu ermöglichen. Dabei wird jedoch der nach vorne versetzte Mittelzinken bisweilen nicht weit genug ausgehoben. Vor allen Dingen aber ergeben sich Probleme hinsichtlich der Arbeitstiefe und dem Anstellwinkel des Mittelzinkens. Da bei Deichselgeräten der genannte nach vorne versetzte Mittelzinken an der Deichsel gelagert wird, verstellt sich die Arbeitsposition des Mittelzinkens gegenüber den übrigen Grubberwerkzeugen, wenn die Deichsel in ihrer Neigung gegenüber dem Maschinenrahmen verstellt wird, was bisweilen notwendig ist, um das gezogene Anbaugerät an den jeweiligen Schlepper anzupassen, aber auch zur Anpassung an verschiedene Bodenverhältnisse erfolgen kann. Durch das Auf- bzw. Niederwippen der Deichsel verstellt sich nicht nur die Arbeitstiefe des an der Deichsel befestigten Mittelzinkens, sondern auch dessen Anstellwinkel. Hierdurch kann die Funktion des nach vorne versetzten Mittelzinkens im Vergleich zu den übrigen Grubberzinken beeinträchtigt werden. Gerade bei einer Ankoppelung des gezogenen Grubbers mittels einer Zugöse, eines Kugelkopfs oder eine Zugpendel kann es zu einer Einschränkung der Funktion kommen.

Der vorliegenden Erfindung liegt die Aufgabe zugrunde, ein verbessertes gezogenes Anbaugerät der eingangs genannten Art zu schaffen, das Nachteile des Standes der Technik vermeidet und letzteren in vorteilhafter Weise weiterbildet. Insbesondere soll eine variabel konfigurierbare und verwendbare Deichselanlenkung erreicht werden, ohne die Arbeitsfunktion des vorversetzten Mittelzinkens zu beeinträchtigen.

Erfindungsgemäß wird hierfür vorgeschlagen, den nach vorne verlagerten Mittelzinken von der Deichsel zu entkoppeln und trotz Anordnung unter der Deichsel so aufzuhängen, dass die Deichsel bewegt werden kann, ohne die Arbeitsposition des Mittelzinkens zu verändern. Erfindungsgemäß ist das zusätzliche Mittelwerkzeug an einer von der Deichsel separaten Anlenkkonsole befestigt, die am Maschinenrahmen befestigt ist und von dessen vorderstem Querträger frontseitig vorspringt. Die Deichsel ist relativ zu der genannten Anlenkkonsole verschwenkbar am Maschinenrahmen befestigt, um die Deichsel auf- und niederwippen zu können, ohne hierdurch die Arbeitstiefe oder den Anstellwinkel des Mittelwerkzeugs zu verstellen. Durch die von der Deichsel separate Anlenkkonsole für den nach vorne versetzten Mittelzinken treten keine Veränderungen der Zinkenarbeitsposition ein, wenn die Deichsel verstellt wird oder sich im Arbeitsbetrieb gegenüber dem Maschinenrahmen bewegt. Hierdurch können alle Anhängevarianten uneingeschränkt verwendet und die Deichsel entsprechend umkonfiguriert werden, ohne dass hierfür der Mittelzinken ummontiert werden müsste. Insbesondere kann die Deichsel wahlweise über ein Ankoppelgelenk an den Unterlenkern des Schleppers angehängt werden, oder über eine Zugöse, einen Kugelkopf oder ein Zugpendel am Schlepper angehängt werden, auch wenn die entsprechenden Anlenk-Gegenstücke am Schlepper in unterschiedlichen Höhen positioniert und dementsprechend die Deichsel in verschiedene Wipp- oder Schrägstellungen gebracht werden muss.

Insbesondere kann die Deichsel auch als Knickdeichsel ausgebildet werden, die um eine liegende Knickachse in sich und/oder gegenüber dem Maschinenrahmen abgeknickt werden kann, um einen vorderen Endabschnitt des Maschinenrahmens, an dem die Deichsel angelenkt ist, in unterschiedliche Höhenstellungen zu bringen.

Die genannte Deichsel kann hierbei zumindest zwei voneinander beabstandete, in einer Ebene angeordnete Deichselstreben umfassen, die an dem genannten Maschinenrahmen um eine liegende Querachse drehbar angelenkt sind, wobei die genannte Anlenkkonsole für die Lagerung des nach vorne versetzten Mittelzinkens in einer Draufsicht betrachtet zwischen den beiden Deichselstreben angeordnet sein kann und die Deichselstreben an der Anlenkkonsole vorbei auf- und niederwippbar sein können. Die Anlenkkonsole kann sich nach Art eines vom Maschinenrahmen auskragenden Balkons nach vorne zum Schlepper erstrecken und rechts und links von den genannten Deichselstreben eingefasst sein, wobei die Deichselstreben ausreichend weit voneinander beabstandet sind, um an der Anlenkkonsole vorbei auf- und niedergewippt werden zu können.

Die genannten Deichselstreben können sich vorteilhafterweise von dem frontseitigen Ankoppelmittel der Deichsel ausgehend nach hinten zum Maschinenrahmen hin V-förmig aufspreizen und am Maschinenrahmen eine lichte Weite definieren, die größer ist als die maximale Breite der genannten Anlenkkonsole. Hierdurch wird einerseits eine stabile Anlenkung des Maschinenrahmens an der Deichsel erzielt. Gleichzeitig kann die Anlenkkonsole zwischen den Deichselstreben hindurchtauchen, wenn die Deichsel nach oben oder nach unten geschwenkt wird.

Die genannte Deichsel kann dabei am Maschinenrahmen in unterschiedlicher Weise angelenkt sein, wobei eine schwenkbare Verbindung mit einer liegenden, sich quer zur Fahrtrichtung erstreckenden Schwenkachse vorgesehen ist, um ein Auf- und Niederwippen der Deichsel zu ermöglichen.

Um das genannte Auf- und Niederwippen der Deichsel steuern und/oder begrenzen und/oder blockieren zu können, kann die Deichsel, insbesondere die beiden vorgenannten Deichselstreben, durch eine Stützstrebe an einem Kopf des Maschinenrahmens abgestützt sein, wobei der Anlenkpunkt der Stützstrebe an besagtem Maschinenrahmenkopf von der Schwenkachse beabstandet ist, um die die Deichsel gegenüber dem Maschinenrahmen schwenkbar ist. Insbesondere kann der genannte Maschinenrahmenkopf bzw. der Anlenkpunkt der Stützstrebe hieran oberhalb der Schwenkachse der Deichsel angeordnet sein und/oder einen starren Teil des Maschinenrahmens bilden.

Die genannte Stützstrebe kann vorteilhafter Weise längenveränderbar ausgebildet sein um verschiedene Wippstellungen der Deichsel einstellen zu können oder zu ermöglichen. Die Längenveränderbarkeit der genannten Deichselstützstrebe kann dabei in verschiedener Weise ausgebildet sein, beispielsweise durch eine teleskopierbare Ausbildung der Deichselstützstrebe mit ineinander schiebbaren Strebenteilen. Alternativ oder zusätzlich kann der Abstützpunkt der Stützstrebe am Kopf des Maschinenrahmens und/oder an der Deichsel verschieblich und/oder versetzbar ausgebildet sein, um die effektive Länge der Deichselstützstrebe bzw. die hiervon bestimmte Beabstandung des Deichsel-Anlenkpunkts vom kopfseitigen Anlenkpunkt der Stützstrebe am Maschinenrahmen verändern zu können. Beispielsweise kann am Kopf des Maschinenrahmens ein ausreichend lang bemessenes Langloch oder eine ähnliche Schiebeführung vorgesehen sein, in der die Stützstrebe mit ihrem Anlenkpunkt verschieblich geführt ist.

In einfacher Ausführung kann die effektive Länge der Deichselstützstrebe beispielsweise über eine Bolzen-Steckverbindung, umfassend mehrere Bolzenstecklöcher realisiert sein, wobei als Abstecklöcher auch Langlöcher in Betracht kommen, um eine Beweglichkeit im Betrieb sicherzustellen. Alternativ oder zusätzlich könnte auch ein manueller Verstellantrieb, beispielsweise in Form einer Stellspindel vorgesehen sein, um die Deichselstützstrebe zu teleskopieren und/oder deren Anlenkpunkt am Maschinenrahmenkopf oder an der Deichsel zu verstellen.

Alternativ oder zusätzlich kann der Deichselstützstrebe aber auch ein fremdenergiebetätigbarer Stellantrieb zugeordnet sein, um die effektive Länge der Deichselstützstrebe und damit die Wippstellung der Deichsel motorisch verstellen zu können.

Die Anlenkkonsole für die Befestigung des unter der Deichsel angeordneten Mittelzinkens kann grundsätzlich in verschiedener Weise ausgebildet sein, beispielsweise in Form einer Blechkastenkonstruktion, die starr am Maschinenrahmen, nach Art einer Zunge vorspringend, angebracht sein kann.

In vorteilhafter Weiterbildung der Erfindung kann die Anlenkkonsole aber auch eine Querstrebe umfassen, die durch zumindest eine Längsstrebe am vordersten Querträger des Maschinenrahmens angelenkt ist und durch eine Anlenkstützstrebe an dem genannten Kopf des Maschinenrahmens abgestützt sein kann. Die genannte Längsstrebe und die Anlenkstützstrebe können zusammen einen Zweischlag oder ein Mehrbein, insbesondere Dreibein, bilden, um den genannten Querträger der Anlenkkonsole ohne größere Biegemomente in den Streben stabil abzustützen.

Insbesondere kann die genannte Querstrebe der Anlenkkonsole durch zwei sich V-förmig nach hinten zum Maschinenrahmen aufspreizende Längsstreben am Maschinenrahmen angelenkt sein. Eine zusätzliche Anlenkstützstrebe kann zu den beiden Längsstreben, die in einer gemeinsamen, liegenden Ebene angeordnet sein können, schräg nach oben geneigt, angeordnet sein, um zusammen mit den beiden Längsstreben ein Dreibein, das den Querträger der Anlenkkonsole, an dem der Mittelzinken befestigt ist, stabil zu halten.

Der sich unter der Deichsel erstreckende Mittelzinken kann an der Anlenkkonsole grundsätzlich starr befestigt sein.

Alternativ kann der Mittelzinken aber auch verstellbar und/oder beweglich an der Anlenkkonsole gelagert sein. Insbesondere kann der Mittelzinken an der Anlenckonsole schwenkbar angelenkt sein, um bei Auftreffen auf einem Stein oder allgemein bei übermäßigen Grubberbelastungen ausweichen zu können, insbesondere - unter Zugrundelegung der Fahrtrichtung - nach hinten und/oder oben. Insbesondere kann der Grubberzinken an der Anlenkkonsole um eine liegende, sich quer zur Fahrtrichtung erstreckende Zinkenschwenkachse schwenkbar gelagert sein, die sich am oberen Ende des Zinkens und/oder unmittelbar an der Anlenkkonsole erstrecken kann.

Um den Grubberzinken im normalen Betrieb in Arbeitsposition zu halten, kann die schwenkbare Lagerung durch einen Rückhaltemechanismus gesperrt und/oder in seiner Beweglichkeit begrenzt und/oder der Grubberzinken in einer Ausgangsstellung vorgespannt sein. Insbesondere kann dem Grubberzinken eine Federeinrichtung zugeordnet sein, die den Grubberzinken um die genannte Schwenkachse in eine Sollarbeitsstellung vorspannt, so dass der Grubberzinken bei Auftreffen auf einen Stein oder auf ein anderes Hindernis unter Verformung bzw. Veränderung der Federeinrichtung ausweichen kann.

Die genannte Federeinrichtung kann beispielsweise eine mechanische Zug- oder Druckfeder sein bzw. umfassen. Alternativ oder zusätzlich kann die Federeinrichtung aber auch einen Gasdruckspeicher bzw. eine Gasdruckfeder umfassen.

Die Erfindung wird nachfolgend anhand eines bevorzugtem Ausführungsbeispiels und zugehöriger Zeichnungen näher erläutert. In den Zeichnungen zeigen:
- Fig. 1: eine perspektivische Heckansicht eines gezogenen Anbaugrubbers nach einer vorteilhaften Ausführung der Erfindung,
- Fig. 2: eine perspektivische Frontansicht des gezogenen Anbaugrubbers aus Fig. 1, die die Anordnung der Deichsel an der Frontseite des Maschinenrahmens und den unter der Deichsel angeordneten Mittelzinken zeigt,
- Fig. 3: eine perspektivische Darstellung des Maschinenrahmens des Anbaugrubbers aus den vorhergehenden Figuren und der daran angelenkten Deichsel mit dem unter der Deichsel angeordneten Mittelzinken, wobei die Anlenkkonsole des Mittelzinkens zwischen den Deichselstreben der Deichsel gezeigt ist,
- Fig. 4: eine Draufsicht auf den Maschinenrahmen und die daran angelenkte Deichsel, die die Anordnung der Anlenkkonsole für den Mittelzinken zwischen den Deichselstreben zeigt.

Wie die Figuren zeigen, kann das gezogene Anbaugerät zur Bodenbearbeitung insbesondere als Grubber ausgebildet sein. Anstelle eines solchen gezogenen Anbaugrubbers 1 mit Grubberzinken könnte das Anbaugerät aber auch andere Bodenbearbeitungswerkzeuge wie Scharscheiben aufweisen und als Scheibenegge, oder auch als Kombinationsgerät mit verschieden ausgebildeten Bodenbearbeitungswerkzeugen ausgebildet sein. Wenn nachfolgend von Grubberzinken oder einem Mittelzinken gesprochen wird kann gleichermaßen bei anderer Ausbildung des gezogenen Anbaugeräts ein entsprechend anderes Bodenbearbeitungswerkzeug, wie eine Scharscheibe oder dergleichen, gemeint sein.

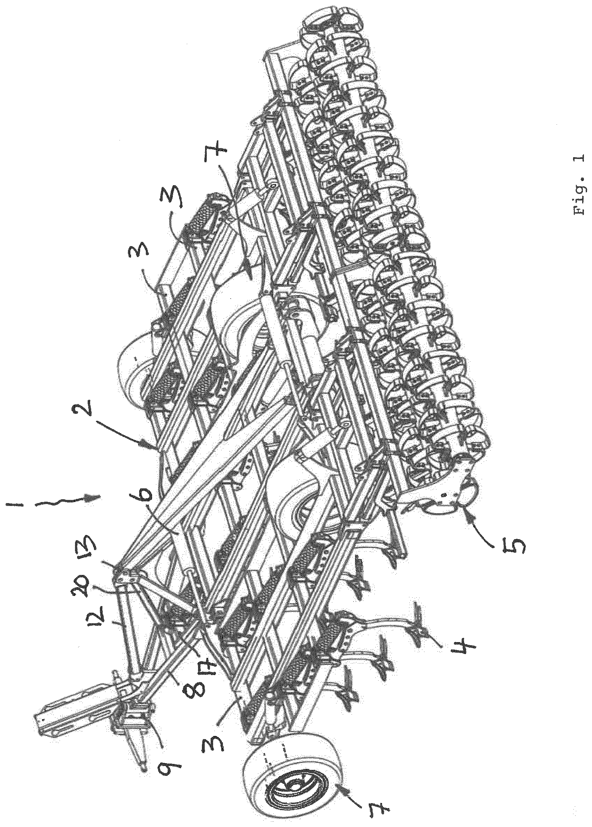

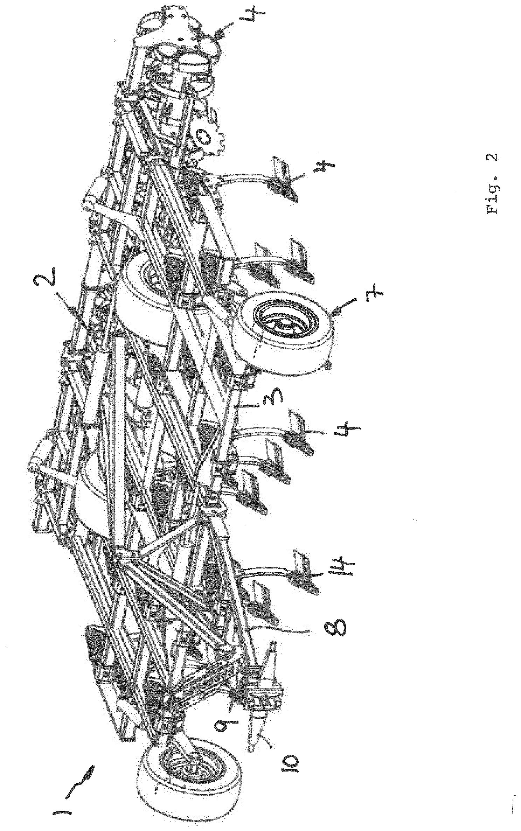

Wie Figuren 1 und 2 zeigen, umfasst der Anbaugrubber 1 einen Maschinenrahmen 2, der mehrere in Fahrtrichtung betrachtet, hintereinander angeordnete, liegende Querträger 3 umfasst, an denen jeweils mehrere Grubberzinken 4 aufgehängt sind,, sodass der Anbaugrubber 1 mehrere hintereinander angeordnete Zinkenreihen umfasst.

Den Grubberzinken 4 hinterherlaufend können eine oder mehrere Nachbearbeitungseinheiten 5 vorgesehen sein, beispielsweise in Form von Zustreichern und einer Nachläuferwalze, beispielsweise in Form einer Federscheibenwalze.

Wie Fig. 1 und 2 zeigen, können die genannten Querträger 3 jeweils unterteilt ausgebildet sein und/oder seitliche Klappabschnitte umfassen, sodass seitliche Maschinenflügel zusammen mit den daran angeordneten Bodenbearbeitungswerkzeugen bzw. Grubberzinken 4 aus der in den Figuren 1 und 2 abgesenkten, liegenden Arbeitsstellung um in Fahrtrichtung weisende Schwenkachsen nach oben in eine Transportstellung verbracht werden können. Eine entsprechende Hubschwenkvorrichtung kann beispielsweise Hydraulikzylinder 6 umfassen und die seitlichen Maschinenrahmenteile nach oben schwenken.

Wie Fig. 1 zeigt, kann dem Maschinenrahmen 2 ein Fahrwerk 7 zugeordnet sein, welches vorteilhafterweise höhenverstellbar gegenüber dem Maschinenrahmen 2 ausgebildet sein kann. Ein solches Fahrwerk 7 kann zum Ausheben der Bodenbearbeitungswerkzeuge für den Straßentransport und/oder auch zur Arbeitstiefeneinstellung Verwendung finden. Hiervon unabhängig kann auch die genannte Nachläuferwalze 5 gegenüber dem Maschinenrahmen 2 höhenverstellbar sein, um die Arbeitstiefe regulieren zu können.

Wie die Figuren 2, 3 und 4 zeigen, ist frontseitig an dem Maschinenrahmen 2, insbesondere an dessen zentralen Rahmenteil, eine Deichsel 8 angebracht, die vom Maschinenrahmen 2 in Fahrtrichtung betrachtet nach vorne vorspringt und sich zumindest näherungsweise liegend erstrecken kann, um das Anbaugerät 1 an einem Schlepper anzuhängen und vom Schlepper ziehen zu können.

An einem vorderen Endabschnitt der Deichsel 8 kann ein Ankoppelgelenk 9 vorgesehen sein, welches ein Verschwenken der Deichsel 8 gegenüber dem Schlepper zumindest um eine aufrechte Achse, vorteilhafterweise aber auch mehrachsig erlaubt. Beispielsweise kann der in den Figuren gezeigte Querlenker 10, der an den Unterlenkern des Schleppers eingehängt werden kann, um ein Ankoppelgelenk 9 gegenüber der Deichsel 8 verschwenkt werden. Alternativ zu einem solchen Querlenker 10 können aber auch andere Anbaumittel und -gelenke Verwendung finden, beispielsweise ein Kugelgelenk bzw. ein Kugelkopf oder eine Zugöse oder ähnliche gelenkige Anbau- bzw. Ankoppelmittel.

An einem vorderen Endabschnitt der Deichsel 8 kann ein Ankoppelgelenk 9 vorgesehen sein, welches ein Verschwenken der Deichsel 8 gegenüber dem Schlepper zumindest um eine aufrechte Achse, vorteilhafterweise aber auch mehrachsig erlaubt. Beispielsweise kann der in den Figuren gezeigte Querlenker 10, der an den Unterlenkern des Schleppers eingehängt werden kann, um ein Ankoppelgelenk 9 gegenüber der Deichsel 8 verschwenkt werden. Alternativ zu einem solchen Querlenker 10 können aber auch andere Anbaumittel und -gelenke Verwendung finden, beispielsweise ein Kugelgelenk bzw. ein Kugelkopf oder eine Zugöse oder ähnliche gelenkige Anbau- bzw. Ankoppelmittel.

Erfindungsgemäß ist die genannte Deichsel 8 an dem Maschinenrahmen 2 um eine liegende Querachse schwenkbar angelenkt, so dass die Deichsel 8 gegenüber dem Maschinenrahmen 2 auf- und niederwippen kann. Insbesondere kann die Deichsel 8 an einem vordersten der genannten Querträger 3 des Maschinenrahmens 2 angelenkt sein, wobei sich die liegende Deichselschwenkachse insbesondere parallel an dem vordersten Querträger 3 erstrecken kann.

Die Deichsel 8 ist dabei über eine Deichselstützstrebe 12 an einem Kopf 13 des Maschinenrahmens 2 abgestützt, wobei die genannte Deichselstützstrebe 12 einerseits an der Deichsel 8 angelenkt und andererseits an besagtem Kopf 13 des Maschinenrahmens 2 angelenkt ist und an sich die Schwenkbewegung der Deichsel 8 um die zuvor genannte Deichselschwenkachse 11 blockiert bzw. begrenzt. Vorteilhafterweise kann die genannte Deichselstützstrebe 12 längenveränderbar ausgebildet sein, beispielsweise teleskopierbar sein und zwei oder auch mehr ineinander schiebbare Strebenteile umfassen. Alternativ oder zusätzlich kann auch ein am Kopf 13 oder der Deichsel 8 verschiebbarer Anlenkpunkt für die Deichselstützstrebe 12 vorgesehen sein, beispielsweise in Form einer Langlochführung oder einer anderen Schiebeführung, um die effektive Länge der Deichselstützstrebe 12 justieren zu können.

Das Justieren der effektiven Länge der Deichselstützstrebe 12 kann mittels eines Einstellmechanismus erfolgen, der beispielsweise einen Spindelmechanismus oder einen fremdenergiebetätigten Kraftheber, beispielsweise einen Druckmittelzylinder umfassen kann.

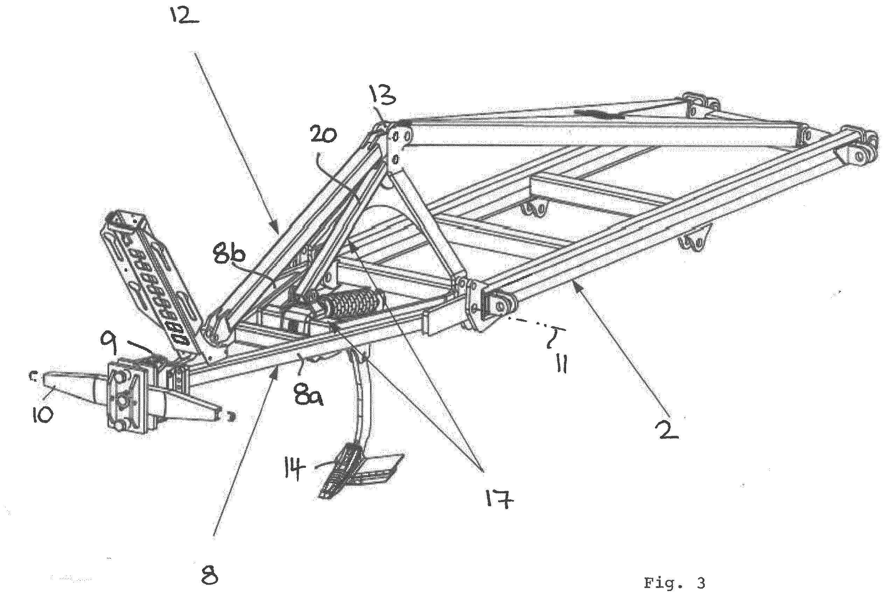

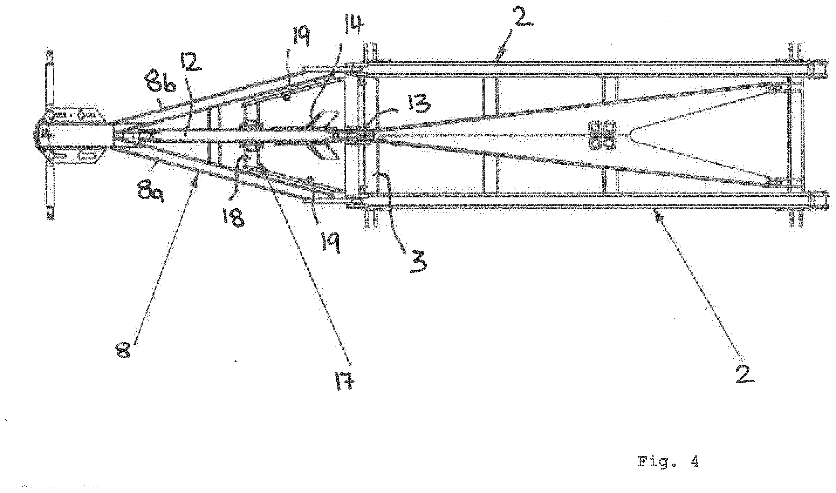

Wie Fig. 3 und 4 zeigen, kann die Deichsel 8 vorteilhafterweise zwei Deichselstreben 8a und 8b umfassen, die sich von dem Ankoppelgelenk 9 der Deichsel 8 ausgehend, zum Maschinenrahmen 2 hin V-förmig aufspreizen können, wobei bei gebogener Ausbildung der Deichselstreben 8a und 8b auch nicht exakt V-förmige, sondern bogenförmige oder U-förmige oder ähnliche sich aufweitende Konturierungen der Deichsel 8 realisiert sein können.

Wie die Figuren zeigen, ist das unter der Deichsel 8 angeordnete Mittelwerkzeug 14, das insbesondere als Mittelzinken bzw. Mittelgrubberzinken ausgebildet sein kann und gegenüber der vordersten Bodenbearbeitungswerkzeugreihe 15, die an dem vordersten Querträger 3 angebracht sein kann, nach vorne versetzt ist, an einer Anlenkkonsole 16 befestigt, die vom Maschinenrahmen 2 nach vorne auskragt und an dem Maschinenrahmen 2 befestigt, insbesondere starr befestigt sein kann.

Insbesondere kann die Anlenkkonsole 17 von dem vordersten Querträger 3 des Maschinenrahmens 2 nach Art einer Zunge vorspringen und sich zwischen den Deichselstreben 8a und 8b erstrecken.

Die Anlenkkonsole 17 kann dabei an ihrem vorderen Ende eine Querträger 18 umfassen, der sich liegend quer zur Fahrtrichtung erstrecken kann und der über zwei Längsstreben 19 am Maschinenrahmen 2 angelenkt sein kann. Die genannten Längsstreben 19 können dabei mit dem Querträger 18 starr verbunden sein und andererseits am Maschinenrahmen 2 gelenkig befestigt sein. Eine Konsolenstützstrebe 20, die spitzwinklich geneigt zur Eben der Längsstreben 19 angeordnet sein kann, kann der genannten Querträger 18 der Anlenkkonsole 17 am Kopf 13 des Maschinenrahmens 2 abstützen, so dass der genannte Querträger 18 nach Art eines Dreibeins fest am Maschinenrahmen 2 abgestützt ist.

Die Längsstreben 19 der Anlenkkonsole 17 können zum Maschinenrahmen 2 hin V-förmig aufgespreizt sein und sich im Wesentlichen parallel und/oder im Innenraum zwischen den Deichselstreben 8a und 8b erstrecken, so dass die Deichsel 8 mit ihren Deichselstreben 8a und 8b an der Anlenkkonsole 17 vorbei auf und nieder gewippt werden kann.

Die Anlenkkonsole 17 kann dabei derart angeordnet sein, dass in zumindest einer Wippstellung der Deichsel 8 sich die Anlenkkonsole 17 und die Deichsel 8 zumindest annähernd in einer gemeinsamen Ebene erstrecken.

Wie Fig. 4 zeigt, kann die Anlenkkonsole 17 eine Länge besitzen, die im Bereich von 25 % bis 75 %, insbesondere etwa 30 bis 50 % der Länge der Deichsel 8 betragen kann.

Das Mittelwerkzeug 14 kann unter der Deichsel 8 in einem Bereich angeordnet sein, der im Bereich von etwa 10 % bis 50 % der Länge der Deichsel 8, gemessen vom Maschinenrahmen 2 aus, liegen kann.

Wie die Figuren 2 und 3 zeigen, kann das Mittelwerkzeug 14 an der Anlenkkonsole 17 nachgiebig und/oder verschwenkbar angelenkt sein, insbesondere schwenkbar um eine liegende Querachse, sodass das Mittelwerkzeug 14 bei Auflaufen auf einen Stein oder ein ähnliches Hindernis nach hinten und oben ausweichen bzw. wegschwenken kann. Die Schwenkachse des Mittelwerkzeugs 14 kann beispielsweise unmittelbar an der Anlenkkonsole 17, insbesondere im Bereich des Querträgers 18 sein.

Um ein ungewolltes Ausweichen des Mittelwerkzeugs 14 zu verhindern, kann eine Ausweichsicherung 21 vorgesehen sein, die das Mittelwerkzeug 14 bei normalen Belastungen bzw. bis zum Erreichen eines Belastungsgrenzwerts in der vorbestimmten Arbeitsstellung hält und erst bei Überschreiten einer Belastungsgrenze ein Ausweichen zulässt.

Eine solche Ausweichsicherung 21 kann beispielsweise eine Vorspanneinrichtung 22 aufweisen, die das Mittelwerkzeug 14 in die Soll-Arbeitsstellung vorspannt, wobei eine solche Vorspanneinrichtung 22 ein Federbein oder eine andere Federeinrichtung umfassen kann.

Die weiteren Bodenbearbeitungswerkzeuge, insbesondere Grubberzinken 4, die an den Querträgern 3 des Maschinenrahmens 2 angelenkt sind, können in ähnlicher Weise daran schwenkbar angelenkt und durch Ausweichsicherungen 21 umfassend, in Vorspanneinrichtung 22 gelagert sein.

## Patentansprüche

1. Gezogenes Anbaugerät, insbesondere Anbaugrubber, zum Anbau an einen Schlepper mit einem Maschinenrahmen (2), der mehrere hintereinander angeordnete Querträger (3) aufweist, an denen jeweils mehrere Bodenbearbeitungswerkzeuge, insbesondere Grubberzinken (4), befestigt sind, wobei an dem Maschinenrahmen (2) frontseitig eine Deichsel (8) um eine liegende, sich quer zur Fahrtrichtung erstreckende Schwenkachse schwenkbar angelenkt ist, die mit einem Ankoppelgelenk (9) zum gelenkigen Ankoppeln an den Schlepper versehen ist, und mittig unter der Deichsel (8) vor dem in Fahrtrichtung vordersten Querträger (3) und den daran befestigten Bodenbearbeitungswerkzeugen ein zusätzliches Bodenbearbeitungs-Mittelwerkzeug (14) vorgesehen ist, **dadurch gekennzeichnet, dass** das zusätzliche Bodenbearbeitungs-Mittelwerkzeug (14) an einer von der Deichsel (8) separaten Anlenkkonsole (17) befestigt ist, die an dem Maschinenrahmen (2) befestigt ist und von dessen vordersten Querträger (3) frontseitig vorspringt, und die genannte Deichsel (8) durch Verschwenken zum Maschinenrahmen um die genannte Schwenkachse relativ zu der Anlenckonsole (17) und dem mittig unter der Deichsel (8) angeordneten Bodenbearbeitungs-Mittelwerkzeug (14) auf- und niederwippbar ist.

2. Gezogenes Anbaugerät nach dem vorhergehenden Anspruch, wobei die Deichsel (8) zwei voneinander beabstandete, in einer gemeinsamen Ebene angeordnete Deichselstreben (8a, 8b) aufweist, die am Maschinenrahmen (2) um eine liegende, sich quer zur Fahrtrichtung erstreckende Deichselschwenkachse (11) schwenkbar angelenkt sind, und wobei die Anlenkkonsole (17) in einer Draufsicht betrachtet zwischen den genannten Deichselstreben (8a, 8b) angeordnet ist und die Deichselstreben (8a, 8b) an der Anlenkkonsole (17) vorbei auf- und niederwippbar sind.

3. Gezogenes Anbaugerät nach dem vorhergehenden Anspruch, wobei die genannten Deichselstreben (8a, 8b) sich von dem Ankoppelgelenk (9) zum Maschinenrahmen (2) hin V-förmig oder U-förmig oder gabelförmig aufspreizen und am Maschinenrahmen (2) eine lichte Weite definieren, die größer ist als die maximale Breite der Anlenkkonsole (17).

4. Gezogenes Anbaugerät nach einem der vorhergehenden Ansprüche, wobei die Deichsel (8) eine Aussparung aufweist, durch die Anlenkkonsole (17) beim Auf- und Niederwippen der Deichsel (8) hindurchtauchen kann.

5. Gezogenes Anbaugerät nach einem der vorhergehenden Ansprüche, wobei die Deichsel (8) durch eine Deichselstützstrebe (12) an einem Rahmenkopf (13) des Maschinenrahmens (2) abgestützt und bezüglich Wippbewegungen relativ zum Maschinenrahmen (2) fixierbar und/oder begrenzbar ist.

6. Gezogenes Anbaugerät nach dem vorhergehenden Anspruch, wobei die Deichselstützstrebe (12) längenveränderbar, insbesondere teleskopierbar und/oder verschieblich angelenkt, ausgebildet ist, so dass unterschiedliche Wippstellungen der Deichsel (8) relativ zum Maschinenrahmen (2) einstellbar sind.

7. Gezogenes Anbaugerät nach einem der vorhergehenden Ansprüche, wobei die Anlenkkonsole (17) einen Querträger (18) umfasst, der durch zumindest eine Längsstrebe (19) am Maschinenrahmen (2), insbesondere an dessen vordersten Querträger (3), angelenkt ist und durch eine Anlenkstützstrebe (20) an einem / dem Rahmenkopf (13) des Maschinenrahmens (2) abgestützt ist.

8. Gezogenes Anbaugerät nach dem vorhergehenden Anspruch, wobei der Querträger (18) der Anlenkkonsole (17) durch zwei V-förmig oder U-förmig oder gabelförmig aufgespreizte Längsstreben (18) am Maschinenrahmen (2) schwenkbar angelenkt ist und durch die genannte Anlenkstützstrebe (20), die spitzwinklich geneigt zu den beiden Längsstreben (19) ausgerichtet ist, abgestützt ist.

9. Gezogenes Anbaugerät nach einem der vorhergehenden Ansprüche, wobei das Ankoppelgelenk (9) der Deichsel (8) zumindest eine aufrechte Schwenkachse zum Verschwenken der Deichsel (8) gegenüber dem Schlepper aufweist.

10. Gezogenes Anbaugerät nach einem der vorhergehenden Ansprüche, wobei das Ankoppelgelenk (9) mehrachsig schwenkbar ist, insbesondere als Kugel- oder Kardangelenk ausgebildet ist.

11. Gezogenes Anbaugerät nach einem der vorhergehenden Ansprüche, wobei das Mittelwerkzeug (14) an der Anlenkkonsole (17) um eine liegende, sich zur Fahrtrichtung quer erstreckende Schwenkachse schwenkbar angelenkt ist und durch eine Ausweichsicherung (21) in einer Soll-Arbeitsstellung zurückgehalten ist.

12. Gezogenes Anbaugerät nach dem vorhergehenden Anspruch, wobei die Ausweichsicherung (21) eine Vorspanneinrichtung (22) zum Vorspannen des Mittelwerkzeugs (14) in dessen Soll-Arbeitsstellung aufweist, wobei die genannte Vorspanneinrichtung (22) dazu ausgebildet ist, ein Ausweichen des Mittelwerkzeugs (14) bei Anfahren auf ein Hindernis zuzulassen.

## Claims

1. Towed attachment, in particular a mounted cultivator, for mounting on a tractor, comprising a machine frame (2), which comprises a plurality of cross members (3) arranged one behind the other, to each of which a plurality of soil working tools, in particular cultivator shanks (4), are fastened, wherein a drawbar (8) is articulated to the front of the machine frame (2) so as to pivot about a horizontal pivot axis extending transversely to the travel direction and is provided with a coupling joint (9) for coupling to the tractor in an articulated manner, and an additional central soil working tool (14) is provided centrally below the drawbar (8) in front of the cross member (3) furthest forward in the travel direction and the soil working tools fastened thereto, **characterised in that** the additional central soil working tool (14) is fastened to an articulation bracket (17) which is separate from the drawbar (8), is fastened to the machine frame (2) and projects at the front from its foremost cross member (3), and said drawbar (8) can be tilted up and down by pivoting relative to the machine frame about said pivot axis relative to the articulation bracket (17) and the central soil working tool (14) arranged centrally below the drawbar (8).

2. Towed attachment according to the preceding claim, wherein the drawbar (8) comprises two drawbar struts (8a, 8b) which are arranged so as to be spaced apart from one another in a common plane and are articulated to the machine frame (2) so as to pivot about a horizontal drawbar pivot axis (11) extending transversely to the travel direction, and wherein the articulation bracket (17), when viewed in a plan view, is arranged between said drawbar struts (8a, 8b) and the drawbar struts (8a, 8b) can be tilted up and down past the articulation bracket (17).

3. Towed attachment according to the preceding claim, wherein said drawbar struts (8a, 8b) spread apart from the coupling joint (9) towards the machine frame (2) in a V-shaped or U-shaped or fork-shaped manner and define a clear width on the machine frame (2) which is greater than the maximum width of the articulation bracket (17).

4. Towed attachment according to any of the preceding claims, wherein the drawbar (8) comprises a cut-out, through which the articulation bracket (17) can penetrate when the drawbar (8) is tilted up and down.

5. Towed attachment according to any of the preceding claims, wherein the drawbar (8) is supported on a frame head (13) of the machine frame (2) by a drawbar support strut (12) and its tilting movements can be fixed and/or limited relative to the machine frame (2).

6. Towed attachment according to the preceding claim, wherein the drawbar support strut (12) is designed to be length-adjustable, in particular articulated in a telescopic and/or slidable manner, such that different tilting positions of the drawbar (8) can be set relative to the machine frame (2).

7. Towed attachment according to any of the preceding claims, wherein the articulation bracket (17) comprises a cross member (18), which is articulated to the machine frame (2), in particular to its foremost cross member (3), by at least one longitudinal strut (19) and is supported on a / the frame head (13) of the machine frame (2) by an articulation support strut (20).

8. Towed attachment according to the preceding claim, wherein the cross member (18) of the articulation bracket (17) is pivotably articulated to the machine frame (2) by two longitudinal struts (18) spread apart in a V-shaped or U-shaped or fork-shaped manner and is supported by said articulation support strut (20), which is oriented so as to be inclined towards the two longitudinal struts (19) at an acute angle.

9. Towed attachment according to any of the preceding claims, wherein the coupling joint (9) of the drawbar (8) has at least one vertical pivot axis for pivoting the drawbar (8) relative to the tractor.

10. Towed attachment according to any of the preceding claims, wherein the coupling joint (9) can be pivoted about multiple axes, and is in particular designed as a ball joint or Cardan joint.

11. Towed attachment according to any of the preceding claims, wherein the central tool (14) is articulated to the articulation bracket (17) so as to pivot about a horizontal pivot axis extending transversely to the travel direction and is held in a target working position by a deviation prevention device (21).

12. Towed attachment according to the preceding claim, wherein the deviation prevention device (21) comprises a pre-tensioning apparatus (22) for pre-tensioning the central tool (14) into its target working position, wherein said pre-tensioning apparatus (22) is designed to allow the central tool (14) to deviate when colliding with an obstacle.

## Revendications

1. Outil tracté, en particulier cultivateur, destiné à être attelé à un tracteur, comprenant un châssis de machine (2), qui comporte plusieurs traverses (3) disposées les unes derrière les autres, auxquelles sont fixés respectivement plusieurs outils de travail du sol, en particulier des dents de cultivateur (4), dans lequel un timon (8) est articulé sur le châssis de machine (2) côté avant de manière pivotante sur un axe de pivotement horizontal s'étendant transversalement au sens de la marche, ledit timon étant pourvu d'un joint d'accouplement (9) pour l'accouplement articulé au tracteur, et un outil central de travail du sol (14) supplémentaire est prévu au centre sous le timon (8) avant la traverse (3) la plus en avant dans le sens de la marche et les outils de travail du sol fixés à celle-ci, **caractérisé en ce que** l'outil central de travail du sol (14) supplémentaire est fixé à une console d'articulation (17) séparée du timon (8), qui est fixée au châssis de machine (2) et qui dépasse côté avant de sa traverse (3) la plus en avant, et ledit timon (8) peut être basculé, par pivotement par rapport au châssis de machine, vers le haut et vers le bas sur ledit axe de pivotement par rapport à la console d'articulation (17) et à l'outil central de travail du sol (14) disposé au centre sous le timon (8).

2. Outil tracté selon la revendication précédente, dans lequel le timon (8) comporte deux barres de timon (8a, 8b) disposées espacées l'une de l'autre dans un plan commun, lesquelles sont articulées sur le châssis de machine (2) de manière pivotante sur un axe de pivotement de timon (11) horizontal s'étendant transversalement au sens de la marche, et dans lequel la console d'articulation (17), vue de dessus, est disposée entre lesdites barres de timon (8a, 8b) et les barres de timon (8a, 8b) peuvent être basculées vers le haut et vers le bas à côté de la console d'articulation (17).

3. Outil tracté selon la revendication précédente, dans lequel lesdites barres de timon (8a, 8b) s'écartent en forme de V ou en forme de U ou en forme de fourchette du joint d'accouplement (9) au châssis de machine (2) et définissent sur le châssis de machine (2) un écartement qui est supérieur à la largeur maximale de la console d'articulation (17).

4. Outil tracté selon l'une des revendications précédentes, dans lequel le timon (8) comporte une ouverture, à travers laquelle la console d'articulation (17) peut plonger lors du basculement vers le haut et vers le bas du timon (8).

5. Outil tracté selon l'une des revendications précédentes, dans lequel le timon (8) est supporté par une barre de support de timon (12) sur une tête de châssis (13) du châssis de machine (2) et peut être fixé et/ou limité en ce qui concerne les mouvements de bascule par rapport au châssis de machine (2).

6. Outil tracté selon la revendication précédente, dans lequel la barre de support de timon (12) est réalisée à longueur modifiable, en particulier télescopique et/ou articulée de manière mobile, de telle sorte que différentes positions de basculement du timon (8) par rapport au châssis de machine (2) peuvent être réglées.

7. Outil tracté selon l'une des revendications précédentes, dans lequel la console d'articulation (17) comprend une traverse (18), qui est articulée par au moins une barre longitudinale (19) sur le châssis de machine (2), en particulier sur sa traverse (3) la plus en avant, et qui est supportée par une barre de support d'articulation (20) sur une/la tête de châssis (13) du châssis de machine (2).

8. Outil tracté selon la revendication précédente, dans lequel la traverse (18) de la console d'articulation (17) est articulée de manière pivotante sur le châssis de machine (2) par deux barres longitudinales (18) écartées en forme de V ou en forme de U ou en forme de fourchette et est supportée par ladite barre de support d'articulation (20), qui est orientée de manière inclinée selon un angle aigu par rapport aux deux barres longitudinales (19).

9. Outil tracté selon l'une des revendications précédentes, dans lequel le joint d'accouplement (9) du timon (8) comporte au moins un axe de pivotement vertical pour le pivotement du timon (8) par rapport au tracteur.

10. Outil tracté selon l'une des revendications précédentes, dans lequel le joint d'accouplement (9) est pivotant sur plusieurs axes, et est en particulier réalisé sous la forme d'un joint à rotule ou d'un joint de cardan.

11. Outil tracté selon l'une des revendications précédentes, dans lequel l'outil central (14) est articulé sur la console d'articulation (17) de manière pivotante sur un axe de pivotement horizontal s'étendant transversalement au sens de la marche, et est retenu dans une position de travail désirée par une sécurité contre les déports (21).

12. Outil tracté selon la revendication précédente, dans lequel la sécurité contre les déports (21) comporte un dispositif de précontrainte (22) pour précontraindre l'outil central (14) dans sa position de travail désirée, ledit dispositif de précontrainte (22) étant conçu pour permettre un déport de l'outil central (14) lors de la rencontre avec un obstacle.
